# EUROPÄISCHE PATENTSCHRIFT

(11) **EP 0 667 551 B1**
(45) Veröffentlichungstag und Bekanntmachung des Hinweises auf die Patenterteilung: **24.10.2001**
(21) Anmeldenummer: 95101572.6
(22) Anmeldetag: 07.02.1995
(51) Int. Cl.: G02C 5/08

(54) **Faltbrille**
Foldable spectacles
Lunettes pliables

(30) Priorität: 15.02.1994 CH 45494
(43) Veröffentlichungstag der Anmeldung: 16.08.1995
(73) Patentinhaber: Scheller, Hansruedi, CH-8815 Horgenberg (CH)
(72) Erfinder: Scheller, Hansruedi, CH-8815 Horgenberg (CH)
(74) Vertreter: Blum, Rudolf Emil Ernst

(56) Entgegenhaltungen:
- DE-A- 3 019 891
- DE-U- 9 105 449
- FR-A- 983 775
- FR-A- 2 231 980
- FR-A- 2 538 921
- GB-A- 397 632
- GB-A- 2 245 989

## Beschreibung

Die Erfindung betrifft eine zusammenklappbare Brille, mit einem optischen Teil und einem nichtoptischen Teil, der die Ohrenbügel und den Nasenbügel umfasst. Eine solche Brille ist aus der FR 2 538 921 bekannt. Dort besteht der Nasenbügel aus einem Kunststoffmaterial, weist zwei Bügelrippen auf und ist mit einem aus einem Metall bestehenden Scharnier versehen, das im Kunststoffmaterial des Nasenbügels eingebettet liegt. Jeder Ohrenbügel umfasst zwei Ohrenbügelteile und ist mittels eines mittleren Gelenkes zusammenklappbar. Nachteilig ist, dass eine solche Brille einen Brillenrahmen (ein Brillengestell) benötigt und das Scharnier als Doppelgelenk mit zwei Gelenkachsen ausgebildet ist, die im beträchtlichen Abstand parallel nebeneinander liegen. Dies ist notwendig, damit die Brille überhaupt zusammengeklappt werden kann. Eine solche Brille hat im zusammengeklappten Zustand noch eine verhältnismässig grosse Dicke, und durch das Brillengestell und das doppelte Gelenk des Scharniers entstehen erhebliche Kosten.

Bekannt ist auch eine nicht zusammenklappbare Brille als sogenannte Lesebrille, bei welcher der optische Teil (die Gläser) aus einem Kunststoffmaterial besteht und mit dem Nasenbügel einstückig ist und kein davon getrennter Rahmen vorhanden ist. Eine solche Brille kann preisgünstig hergestellt werden. Sie ist jedoch nicht zusammenklappbar und daher nur sperrig zu versorgen.

Es wird die Schaffung einer zusammenklappbaren Brille bezweckt, die kostengünstig herstellbar ist. Diese Aufgabe wird durch die Merkmale des unabhängigen Anspruchs gelöst.

Die erfindungsgemässe Brille ist dadurch gekennzeichnet, dass der Nasenbügel mit dem optischen Teil einstückig aus dem Kunststoffmaterial ist und dass jede Bügelrippe des Nasenbügels mit einer auf der Brilleninnenseite liegenden Ausnehmung versehen ist, in der bei zusammengeklappter Brille die zusammengeklappten Ohrenbügel liegen.

In der Zeichnung ist ein Ausführungsbeispiel des Erfindungsgegenstandes dargestellt. Es zeigen:
Figur 1 einen Teil der Brille, von der Innenseite der Brille her gesehen, vergrössert,
Figur 2 eine Draufsicht auf den Brillenteil nach Figur 1,
Figur 3 die zusammengeklappte Brille in einer Ansicht in Richtung des Pfeiles A in Figur 1, und
Figur 4 die zusammengeklappte Brille in einer Ansicht in Richtung des Pfeiles B in Figur 3.

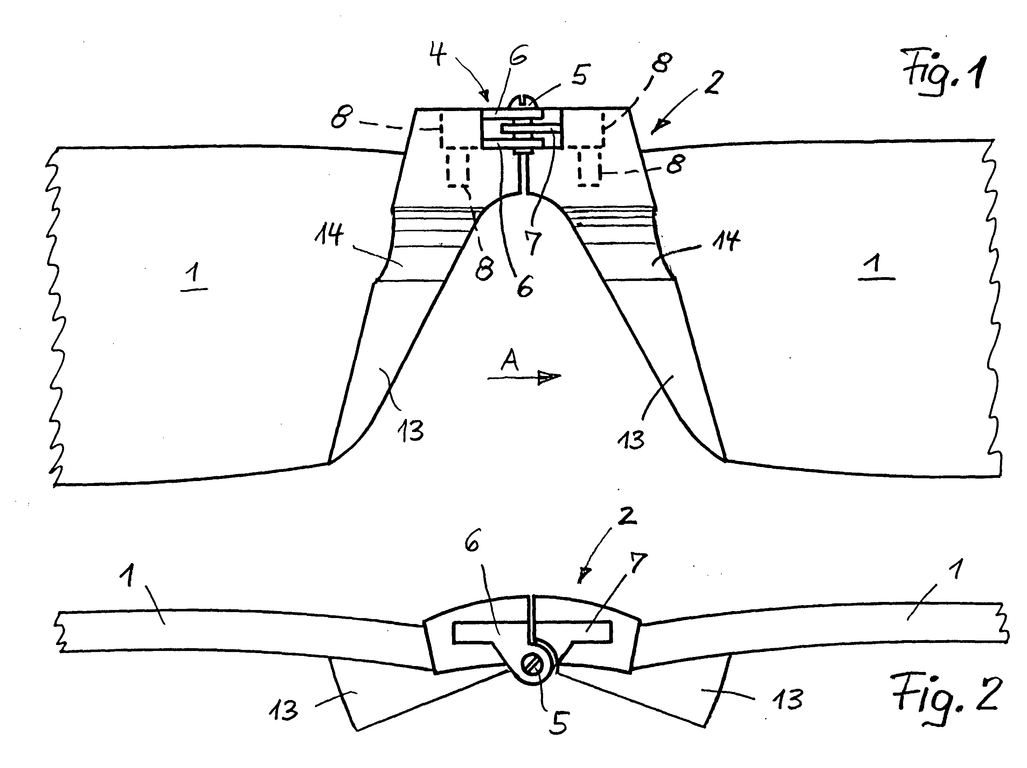

Der optische Teil der Brille besteht aus den beiden sogenannten Gläsern 1 (auch wenn sie aus einem Kunststoffmaterial sind). Der nichtoptische Teil der Brille umfasst den Nasenbügel 2 und die beiden Ohrenbügel 3. Der optische Teil 1 und der Nasenbügel 2 sind einstückig und bestehen aus einem Kunststoffmaterial. Der Nasenbügel ist mit einem aus einem Metall bestehenden Scharnier 4 versehen, das im Kunststoffmaterial des Nasenbügels eingebettet liegt. Das Scharnier 4 hat nur eine einzige Gelenkachse, die beim dargestellten Beispiel durch eine Schraube 5 gebildet wird. Die beiden mittels der Schraube 5 gelenkig miteinander verbundenen Scharnierteile 6 und 7 erstrecken sich in Figur 1 über den Linienzug 8, und zeigen, dass dieser im Kunststoffmaterial des Nasenbügels eingebettete Teil des Scharniers eine Metall-Armierung des Kunststoffes darstellt.

Jeder Ohrenbügel 3 ist mittels eines mittleren Gelenkes 9 zusammenklappbar und umfasst somit zwei Ohrenbügelteile 10 und 11, wobei der beim Ohr zu tragende Bügelteil 10 üblicherweise mit einer Kunststoffummantelung 12 versehen ist.

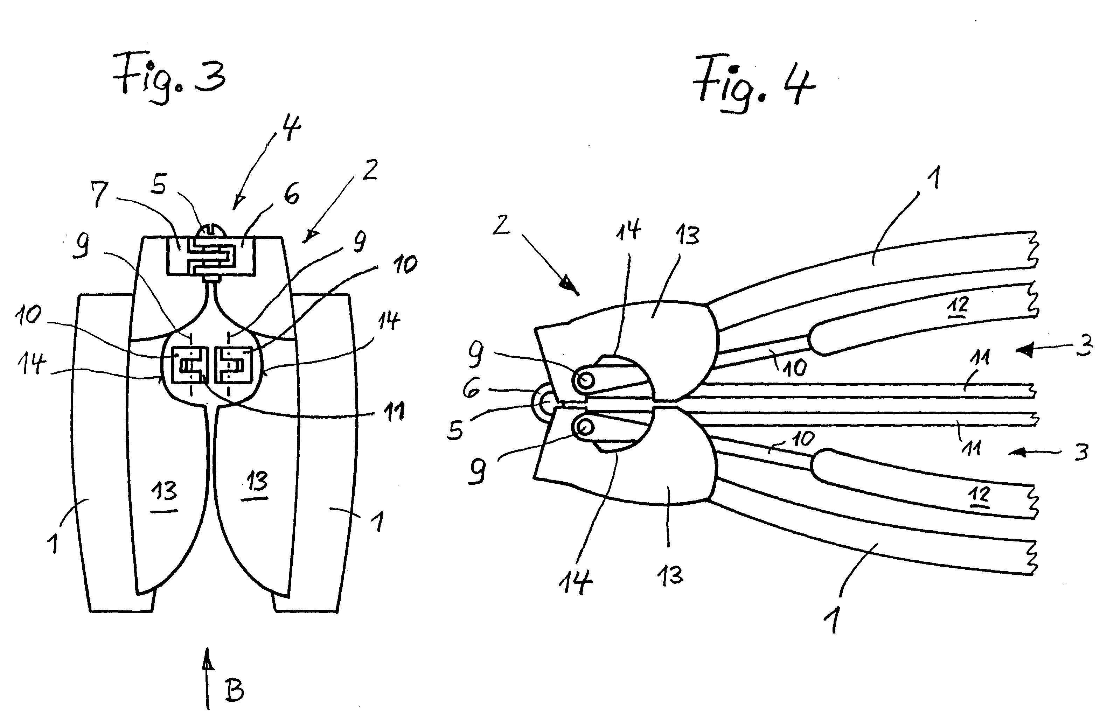

Der Nasenbügel 2 weist zwei Bügelrippen 13 auf, wobei jede Bügelrippe 13 mit einer auf der Brilleninnenseite liegenden Ausnehmung 14 versehen ist. Beide Ausnehmungen 14 ergänzen sich bei zusammengeklappter Brille nahezu zu einer kreisförmigen Ausnehmung, in der die zusammengeklappten Ohrenbügel 3 liegen, wie aus den Figuren 3 und 4 ersichtlich ist. Damit die zusammengeklappten Ohrenbügel 3 mit ihren beiden Teilen 10 und 11 und ihrem Gelenk 9 in diesen beiden Ausnehmungen 14 gut Platz finden, bestehen diese Bauteile 9 bis 11 aus Metall und können daher klein dimensioniert werden.

Die dargestellte Brille, bei der also der optische Teil 1 und der Nasenbügel einstückig sind und aus einem Kunststoffmaterial bestehen, wird üblicherweise als sogenannte Lesebrille verwendet, die sehr preiswert hergestellt werden kann. Hierzu trägt auch bei, dass das beim Nasenbügel liegende Scharnier nur eine einzige Gelenkachse aufweist. Durch die beiden Ausnehmungen 14 weist die zusammengeklappte Brille eine aus Figur 3 ersichtliche Dicke auf, die geringer ist als bei bekannten zusammenklappbaren Brillen, wobei sich diese erwähnte Dicke als Breite in Figur 3 von links nach rechts erstreckt.

Das aus den Teilen 5-8 bestehende Scharnier des Nasenbügels 2 hat noch den Vorteil, dass nach dem Oeffnen der nur einen Schraube 5 die Brille in zwei Brillenhälften geteilt ist, so dass z.B. eine neue Brille aus zwei unterschiedlichen optischen Teilen 1 zusammengestellt werden kann, sei es weil die Augen unterschiedlich sind, oder weil ein Brillenteil zerbrochen ist oder ein optischer Teil 1 zerkratzt ist. Die zusammengeklappte Brille nach Figur 3 ist auch verhältnismässig stabil, da bei Druckausübung in Figur 3 von links und rechts sowohl die Bauteile 9-11 aneinander und auch an der Wandung der Ausnehmungen 14 anliegen können, wobei gleichzeitig auch die beiden Bügelrippen 13 aneinander anliegen und weiterhin eine Abstützung über die Teile 5-8 des Scharniers 4 vorhanden ist, so dass durch die gegenseitige Abstützung dieser Bauteile eine formstabile Brille im zusammengeklappten Zustand erhalten wird.

## Patentansprüche

1. Brille, mit einem optischen Teil (1) und einem nichtoptischen Teil (2, 13, 14; 3, 9-12), der einen Nasenbügel (2) und zwei Ohrenbügel (3) umfasst, wobei der Nasenbügel (2) aus einem Kunststoffmaterial ist, zwei Bügelrippen (13) aufweist und mit einem aus einem Metall bestehenden Scharnier (4) versehen ist, das im Kunststoffmaterial des Nasenbügels (2) eingebettet liegt, und wobei jeder Ohrenbügel (3) zwei Ohrenbügelteile (10, 11) umfasst und mittels eines mittleren Gelenkes (9) zusammenklappbar ist, **dadurch gekennzeichnet, dass** der Nasenbügel (2) mit dem optischen Teil (1) einstückig aus dem Kunststoffmaterial ist und dass jede Bügelrippe (13) des Nasenbügels (2) mit einer auf der Brilleninnenseite liegenden Ausnehmung (14) versehen ist, in der bei zusammengeklappter Brille die zusammengeklappten Ohrenbügel (3, 9-11) liegen.

2. Brille nach Anspruch 1, **dadurch gekennzeichnet, dass** das Scharnier (4) nur eine einzige Gelenkachse (5) aufweist.

3. Brille nach Anspruch 1 oder 2, **dadurch gekennzeichnet, dass** beide Ausnehmungen (14) sich bei zusammengeklappter Brille nahezu zu einer kreisförmigen Ausnehmung ergänzen, in der die zusammengeklappten Ohrenbügel (3) mit ihren beiden Ohrenbügelteilen (10, 11) und ihrem Gelenk (9) liegen.

4. Brille nach einem der Ansprüche 1-3, **dadurch gekennzeichnet, dass** die Ohrenbügelteile (10, 11) und ihr jeweils mittleres Gelenk (9) aus Metall bestehen.

5. Brille nach einem der Ansprüche 1-4, **dadurch gekennzeichnet, dass** bei zusammengeklappter Brille die beiden Bügelrippen (13) aneinander anliegen und weiterhin über Teile (5-8) des Scharniers (4) eine Abstützung vorhanden ist.

6. Brille nach einem der Ansprüche 1-5, **dadurch gekennzeichnet, dass** bei zusammengeklappter Brille die Gelenke (9) und Ohrenbügelteile (10, 11) aneinander und an einer Wandung der Ausnehmungen (14) anliegen und gegenseitig abgestützt sind.

7. Brille nach einem der Ansprüche 1-6, **dadurch gekennzeichnet, dass** sie als sogenannte Lesebrille ausgebildet ist.

## Claims

1. Eyeglasses, having an optical part (1) and a non-optical part (2, 13, 14; 3, 9-12) which comprises a nosepiece (2) and two earpieces (3), wherein the nosepiece (2) is of a synthetic material, has two ribs (13) and is provided with a hinge (4), consisting of a metal, that lies embedded in the synthetic material of the nosepiece (2), and wherein each earpiece (3) comprises two earpiece parts (10, 11) and is foldable by means of a middle joint (9), **characterized in that** the nosepiece (2) is with the optical part (1) in one piece made from the synthetic material and that each rib (13) of the nosepiece (2) is provided with a recess (14), lying on the inner side of the eyeglasses, in which the folded earpieces (3, 9-11) lie when the eyeglasses are folded.

2. Eyeglasses according to claim 1, **characterized in that** the hinge (4) has only a single joint axis (5).

3. Eyeglasses according to claim 1 or 2, **characterized in that** both recesses (14) combine to form an almost circular recess in which the folded earpieces (3) with their two earpiece parts (10, 11) and their middle joint (9) lie.

4. Eyeglasses according to one of the claims 1-3, **characterized in that** the earpiece parts (10, 11) and their respective middle joint (9) consist of metal.

5. Eyeglasses according to one of the claims 1-4, **characterized in that** the two ribs (13) rest on one another and, in addition, a support via parts (5-8) of the hinge (4) is present when the eyeglasses are folded.

6. Eyeglasses according to one of the claims 1-5, **characterized in that** the joints (9) and earpiece parts (10, 11) rest on one another and on a wall of the recess (14) and are mutually supported when the eyeglasses are folded.

7. Eyeglasses according to one of the claims 1-6, **characterized in that** they are designed as so-called reading glasses.

## Revendications

1. Lunettes avec une partie optique (1) et une partie non-optique (2, 13, 14; 3, 9-12) comportant un pontet nasal (2) en matière plastique et deux branches (3), le pontet (2) comprenant deux nervures (13) et étant muni d'une charnière métallique (4) ancrée dans le matériau plastique du pontet, chaque branche (3) comprenant deux éléments (10, 11) et étant repliable autour d'une articulation centrale (9), **caractérisées en ce que** le pontet est en matière plastique et réalisé d'une pièce avec la partie optique (1) et **en ce que** chaque nervure (13) du pontet présente une encoche (14) située du coté intérieur des lunettes et dans laquelle viennent se loger les branches repliées (3, 9-11) lorsque les lunettes sont repliées.

2. Lunettes selon la revendication 1, **caractérisées en ce que** la charnière (4) ne comporte qu'un seul axe d'articulation (5).

3. Lunettes selon une des revendications 1 ou 2, **caractérisées en ce qu'**une fois les lunettes repliées les deux encoches (14) forment ensemble une cavité presque circulaire dans laquelle viennent se loger les deux éléments (10, 11) et l'articulation (9) des branches (3) repliées.

4. Lunettes selon une des revendications précédentes, **caractérisées en ce que** les éléments (10, 11) des branches ainsi que leurs articulations centrales (9) sont métalliques.

5. Lunettes selon une des revendications précédentes, **caractérisées en ce que** lorsque les lunettes sont repliées les deux nervures (13) reposent côte à côte et qu'un support est fourni par des parties (5-8) de la charnière.

6. Lunettes selon une des revendications précédentes, **caractérisées en ce que** lorsque les lunettes sont repliées les articulations (9) et les branches (10, 11) reposent les unes contre les autres ainsi que contre une paroi des encoches (14) et se stabilisent mutuellement.

7. Lunettes selon une des revendications précédentes, **caractérisées en ce qu'**elles sont du type dit de lecture.
